# EUROPEAN PATENT APPLICATION

(11) **EP 1 723 883 A2**
(43) Date of publication of application: **22.11.2006**
(21) Application number: 06290394.3
(22) Date of filing: 09.03.2006
(51) Int. Cl.: A47L 9/00, A47L 9/22

(54) **Exhausting apparatus of a motor assembly and a vacuum cleaner having the same**

(30) Priority: 20.05.2005 KR 20050042560
(71) Applicant: Samsung Gwangju Electronics Co., Ltd., Gwangju-city (KR)
(72) Inventor: Song, Hwa-gyu, Gwangsan-gu Gwangju-city (KR); Oh, Hyun-jun, Gwangju-city (KR); Lee, Sung-cheol, Gwangsan-gu Gwangju-city (KR)
(74) Representative: Blot, Philippe Robert Emile

(57) **Abstract**

Disclosed are an exhausting apparatus (29) of a motor assembly (30) and a vacuum cleaner (20) having the same. The exhausting apparatus (29) of a motor assembly (30) includes: a motor assembly (30) formed with an air discharge port (35b); a motor housing (50) enclosing the motor assembly (30) and formed with an outlet (51) exhausting an air discharged through the air discharge port (35b); and a sound insulation plate (61) made of a porous material mounted on the discharge passage (P) formed by the motor housing (50).

## Description

### CROSS-REFERENCE TO RELATED APPLICATIONS

This application claims benefit under 35 U.S.C. § 119(a) of Korean Patent Application No. 2005-42560, filed May 20, 2005, in the Korean Intellectual Property Office, the entire contents of which are incorporated herein by reference.

### BACKGROUND OF THE INVENTION

### Field of the invention

The present invention relates to an exhausting apparatus exhausting an air discharged from a motor assembly and a vacuum cleaner having the same.

### Description of the Related Art

Generally, a vacuum cleaner draws external dusts or alien substances in a dust collecting chamber by a suction force generated by driving a driving motor mounted in a driving chamber of a main body, and the driving motor may be employed with a high-power generating motor with a high Revolutions Per Minutes (RPM) characteristic of a cleaner. The use of motor generates a louder noise in driving the motor and accordingly, needs a noise preventing structure preventing the noise.

As one example of noise preventing structures, disclosed is a Korea Patent Laid-Open No. 10-1998-075351.

A schematic structure of the abovementioned vacuum cleaner is as follows. The vacuum cleaner having a dust collecting chamber provided with a dust bag and a driving chamber mounted with a driving motor generating a suction force comprises: a front cover enclosing a front surface of the driving motor by a dust-proof member; a first chamber whose one side is fixed on the front cover, and which encloses an external circumference of a rear surface of the driving motor; a third chamber whose one end is fixed with the first chamber, which is formed at a predetermined space with the first chamber from the external circumference of the first chamber, and which is transmitted with air from the first chamber through a first communicating vessel; and a second chamber arranged at a predetermined space with each of the first and the third chambers, therebetween and having an outlet partitioned from the first chamber and exhausting into the driving chamber the air transmitted from the third chamber through a second communicating vessel.

As another example of noise-preventing structures, disclosed is a Korea Patent Laid-Open No. 10-2004-80092.

In a schematic structure of the abovementioned vacuum cleaner, a motor case is formed to have a front case and a rear case to reduce noise generated by driving a fan motor. Mainly aimed at reducing the noise of the vacuum cleaner, the motor case is formed to completely enclose the exterior of the fan motor.

In the abovementioned conventional vacuum cleaners, the vacuum cleaner disclosed in the Korea Patent Laid-Open No. 10-1998-075351 is formed with the first through the third chambers, and the vacuum cleaner disclosed in the Korea Patent Laid-Open No. 10-2004-80092 is formed with the front and the rear cases, to enclose the fan motor for noise reduction.

The member to enclose the fan motor is generally used with a fire retardant polypropylene in consideration of sound insulation and fire prevention. However, the polypropylene is not satisfactory in noise reduction, while it is effective in fire prevention.

Generally, the fan motor is mounted in a lengthwise direction of a main body of the vacuum cleaner. Considering that the air drawn in the fan motor immediately the cleaner body in the same direction as the air-drawn, and a passage where the air stays within the main body of the vacuum cleaner may be shorter. Accordingly, noise-reduction effects may be lower, because of the passage is not long enough to reduce the noise, though the motor case encloses the fan motor to reduce the noise.

SUMMARY OF THE INVENTION

An aspect of the present invention is to solve at least the above problems and/or disadvantages of the related art and to provide at least the advantages described below. Accordingly, an aspect of the present invention is to provide an exhausting apparatus of a motor assembly and a vacuum cleaner having the same, which provides improved noise insulation effects by enhancing a material for a housing enclosing a driving motor, and a structure of the housing.

Another aspect of the present invention is to provide an exhausting apparatus of a motor assembly and a vacuum cleaner having the same, which has a passage long enough to reduce a noise.

In order to achieve the above-described aspects of the present invention, there is provided an exhausting apparatus of a motor assembly comprising: a motor assembly generating a suction force and formed with an air discharge port; a motor housing enclosing the motor assembly and formed with an outlet exhausting an air discharged through the air discharge port; and a sound insulation plate made of a porous material mounted on the discharge passage formed by the motor housing.

The motor housing comprises a sound insulation part made of the porous material at least one part, and at least one part of the air discharged from the air discharge port passes through the sound insulation part. An amount of the air passing through the sound insulation plate equals an amount of the air passing through the sound insulation part. The sound insulation plate is mounted on the outlet of the motor housing, on the discharge passage.

The sound insulation plate is made of a low-density porous plastic, the sound insulation part is a made of a high-density porous plastic, and a rest part of the motor housing excluding the sound insulation part is made of a high-intensity of plastic.

The discharge passage comprises an internal passage formed in the motor housing and an external passage formed outside the motor housing, and the spiral internal passage spirally discharges the air discharged through the air discharge port of the motor assembly. The motor housing comprises an internal passage wall and an external passage wall forming the passage, and the internal passage wall is made of the porous material at least one part.

The sound insulation plate is made of a low-density porous material, the internal passage wall of the motor housing is made of a high-density porous material, and a rest part of the motor housing excluding the internal passage wall is made of the high-intensity plastic.

In order to achieve the above-described aspects of the present invention, there is provided a vacuum cleaner comprising: a main body of the vacuum cleaner internally partitioned with a dust collecting chamber and a motor chamber; a brush assembly communicated with the dust collecting chamber and formed with a suction port where an external air laden with a dust is drawn; a motor assembly mounted on the motor chamber and generating a suction force, and formed with an air discharge port; a motor housing enclosing the motor assembly, and formed with an outlet exhausting an air discharged from the air discharge port; and a sound insulation plate made of a porous material mounted on the discharge passage formed by the motor housing, and the motor housing comprises a sound insulation part made of the porous material at least one part, and at least one part of the air discharged from the air discharge port passes through the sound insulation part. The sound insulation plate is mounted on the outlet of the motor housing, on the discharge passage. The sound insulation plate is made of a low-density porous plastic, the sound insulation part is a made of a high-density porous plastic, and a rest part of the motor housing excluding the sound insulation part is made of a high-intensity of plastic. An amount of the air passing through the sound insulation plate equals an amount of the air passing through the sound insulation part.

The motor assembly is mounted in a widthwise direction within the main body of the vacuum cleaner. The vacuum cleaner further comprises a suction pipe connecting the main body of the vacuum cleaner and the motor assembly at a predetermined interval in a lengthwise.

The discharge passage comprises an internal passage formed in the motor housing and an external passage formed outside the motor housing, and the spiral internal passage spirally discharges the air discharged through the air discharge port of the motor assembly. The motor housing comprises a sound insulation part made of the porous material at least one part, and at least one part of the air discharged from the air discharge port passes through the sound insulation part. The sound insulation plate is made of the low-density porous plastic, the sound insulation part is a made of the high-density porous plastic, and the rest part of the motor housing excluding the sound insulation part is made of the high-intensity of plastic.

BRIEF DESCRIPTION OF THE DRAWING FIGURES

The above aspect and other features of the present invention will become more apparent by describing in detail exemplary embodiments thereof with reference to the attached drawing figures, wherein;

FIG. 1 is a perspective view of a vacuum cleaner employed with an exhausting apparatus of a motor assembly according to a first embodiment of the present invention;

FIG. 2 is a sectional view taken along a line II-II of FIG. 1;

FIG. 3 is a partially cutaway view of a main body of the vacuum cleaner and the exhausting apparatus of the motor assembly;

FIG. 4 is a vertical view of a main body of a vacuum cleaner and an exhausting apparatus of a motor assembly employed with a motor housing having a spiral internal passage according to a second embodiment of the present invention;

FIG. 5 is a perspective view of the exhausting apparatus of the motor assembly of FIG. 4;

FIG. 6 is a sectional view taken along a line VI-VI of FIG. 5;

FIG. 7 is a partially cutaway view of an impeller installment part of FIG. 4;

FIG. 8 is a vertical view of a main body of a vacuum cleaner and an exhausting apparatus of a motor assembly having the motor assembly internally mounted in a widthwise direction according to a third embodiment of the present invention; and

FIG. 9 is a graph showing noise reduction effects by the exhausting apparatus of the motor assembly of FIG. 8.

DETAILED DESCRIPTION OF THE EXEMPLARY EMBODIMENTS

Hereinafter, an embodiment of the present invention will be described in detail with reference to the accompanying drawing figures.

In the following description, same drawing reference numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

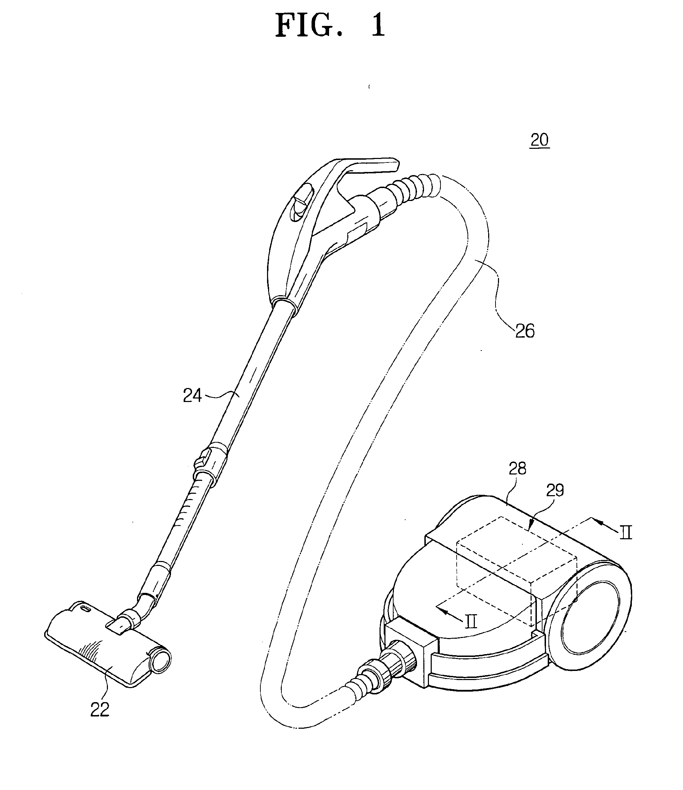

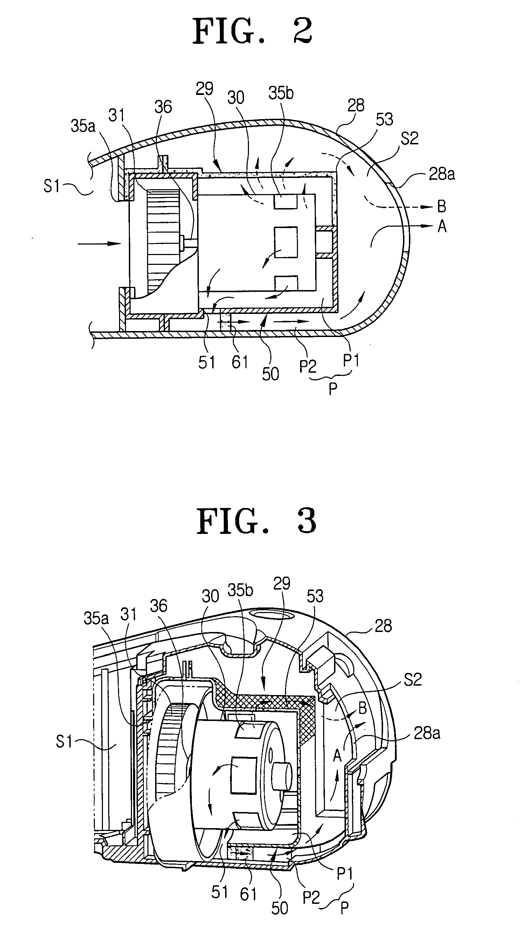

FIG. 1 is a perspective view of a vacuum cleaner employed with an exhausting apparatus of a motor assembly according to a first embodiment of the present invention, FIG. 2 is a sectional view taken along a line II-II of FIG. 1, and FIG. 3 is a partially cutaway view of a main body of the vacuum cleaner and the exhausting apparatus of the motor assembly.

According to the embodiment of the present invention, a canister type of vacuum cleaner is described, but the vacuum cleaner and the exhausting apparatus of the motor assembly of the present invention may be applied to various type of vacuum cleaners such as an upright type of vacuum cleaner and a stick type of vacuum cleaner in addition to the canister type of vacuum cleaner.

Referring to FIGS. 1 and 2, the vacuum cleaner 20 includes the main body of the vacuum cleaner 28, a brush assembly 22, the exhausting apparatus 29 of the motor assembly, an extension tube 24, and a flexible hose 26.

The main body 28 of the vacuum cleaner has a dust collecting chamber S1 and a motor chamber S2, and an exhaust port 28a exhausting an air on the rear. The dust collecting chamber S1 is mounted with a dust bag or a cyclone dust collecting apparatus which are not described because they are not important parts of the present invention.

The brush assembly 22 is communicated with the dust collecting chamber S1 of the main body 28 of the vacuum cleaner through the extension tube 24 and the flexible hose 26, and formed with a suction port (not shown) drawing in an external air laden with dusts.

Referring to FIGS. 2 and 3, the exhausting apparatus 29 of the motor assembly includes a motor assembly 30, a motor housing 50, and a sound insulation plate 61.

The motor assembly 30 is internally mounted within the motor chamber S2. The motor assembly 30 has an impeller 31 generating a suction force. The impeller 31 is an axial flow impeller making a fluid to flow in a direction of a driving shaft 36. The front of the motor assembly 30 is mounted with an air suction port 35a drawing in the air. The circumference of the motor assembly 30 is formed with an air discharge port 35b discharging the air.

The motor housing 50 encloses the motor assembly 30. The motor housing 50 is formed larger than the motor assembly 30, and provides a discharge passage P guiding the air discharged from the air discharge port 35b externally from the main body 28 of the vacuum cleaner. The discharge passage P includes an internal passage P1 between the motor assembly 30 and the motor housing 50, and an external passage P2 between the motor housing 50 and the main body 28 of the vacuum cleaner.

One part of the discharge passage P is formed with an outlet 51 for communicating the internal passage P 1 and the external passage P2 on a lower part of the motor housing 50 along a rotation direction of the driving shaft 36.

A sound insulation plate 53 made of a porous material is formed on an upper part of the motor housing 50 in the opposite to the outlet 51. A part of the air discharged from the air discharge port 35b is discharged into the sound insulation part 53, to maintain the entire air discharge constant, though the air stays stationary due to the sound insulation plate 61. That is, the air is discharged through the sound insulation plate 61 along an arrow in a solid line (a direction of A), and the rest of the air having failed to be discharged through the sound insulation plate 61 is discharged through the sound insulation part 53 along an arrow in a dotted line (a direction of B).

The sound insulation part 53 may be made of a higher density porous plastic material than the sound insulation plate 61, in order for the air discharged through the outlet 51 to equal the air discharged through the sound insulation part 53. A porous plastic is completed by equally mixing fine powers of magnesium and iron, and a high density polyethylene, and manufacturing them into a porous form.

The entire motor housing 50 may be made of the porous plastic material. However, considering that the porous plastic has a relatively weak intensity, a part of the sound insulation part 53 may be made of the porous material, and the rest of the sound insulation part 53 may be completed with a high intensity plastic, for example, polyethylene, in order to supplement intensity shortages of the porous plastic.

The sound insulation plate 61 is mounted on the external passage P2. The sound insulation plate 61 is made of a porous material, to pass the air through. As the air passes through the sound insulation plate 61, the air flows longer and accordingly a noise reduces. The sound insulation plate 61 may be made of the low density porous plastic. The abovementioned sound insulation plate 61, sound insulation part 53, and motor housing 50 may be made of a fire retardant plastic material to prevent the motor assembly 30 from being overheated.

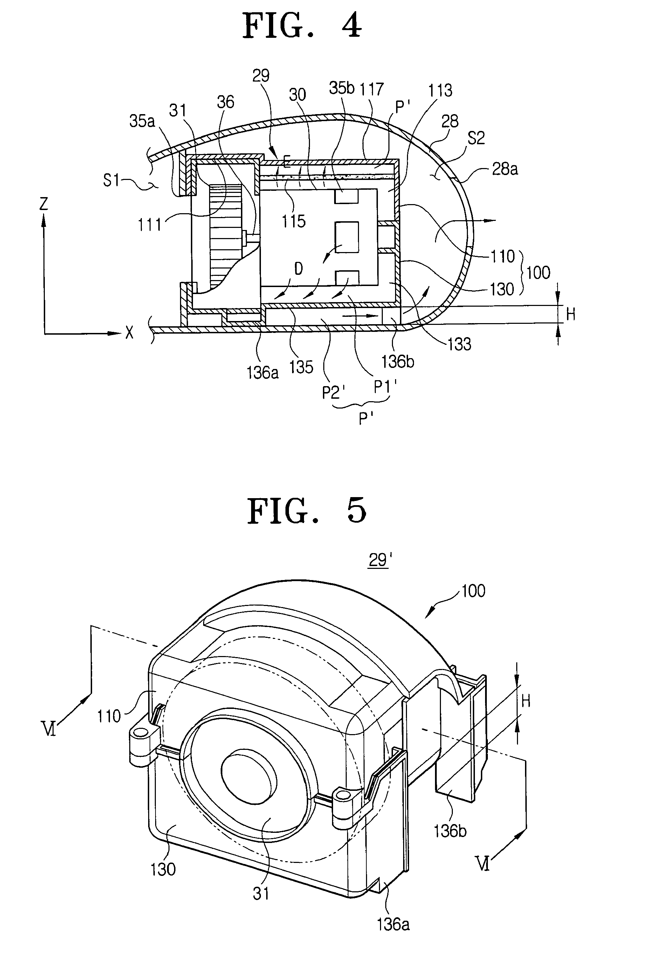

FIG. 4 is a vertical view of a main body of a vacuum cleaner and an exhausting apparatus of a motor assembly employed with a motor housing having a spiral internal passage according to a second embodiment of the present invention, and FIG. 5 is a perspective view of the exhausting apparatus of the motor assembly of FIG. 4. According to the second embodiment of the present invention, structures the same as those of the first embodiment of the present invention, will be applied with reference numbers of the first embodiment, and a description will be omitted.

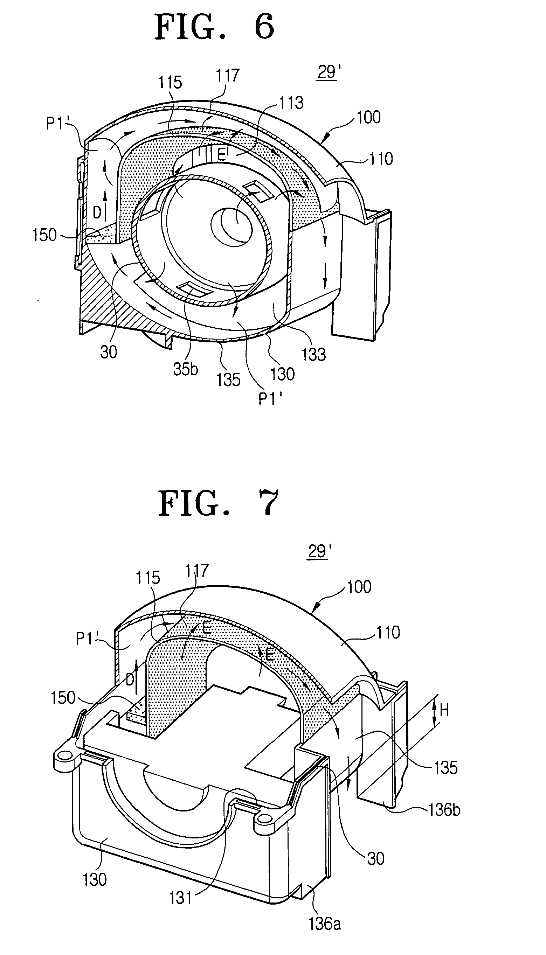

Referring to FIGS. 4 and 5, an exhausting apparatus 29' of a motor assembly includes a motor assembly 30, a motor housing 100 and a sound insulation plate 150 (see FIG. 6).

The motor assembly 30 is the same as the motor assembly 30 of FIGS. 2 and 3, so will not be described.

A motor housing 100 spirally guides an air discharged from an air discharge port 35b and externally discharges the air. The motor housing 100 includes an upper casing 110 and a lower casing 130. The upper and lower casings 110, 130 are internally partitioned with an impeller housing chamber 111 and motor housing chambers 113, 133 to mount the impeller 31.

Front and rear parts of the lower casing 130 are protruded with interval maintaining parts 136a, 136b maintaining a predetermined interval H with respect to a bottom of the main body 28 of the vacuum cleaner. The air discharged from the motor housing is exhausted into an exhaust port 28a through the interval maintaining parts 136a, 136b.

FIG. 6 is a sectional view taken along a line VI-VI of FIG. 5, and FIG. 7 is a partially cutaway view of an impeller installment part of FIG. 4.

Referring to FIGS. 6 and 7, in a motor housing 100, a spiral internal passage P1' spirally guiding an air discharged through an air discharge port 35b is formed by an internal partition 115, an external partition 117 and a lower partition 135. The sound insulation plate 150 made of a low density porous plastic is mounted between the internal partition 115 and the external partition 117. The internal partition 115 near a motor assembly 30 may be made of a high density porous plastic material, to supplement exhausting area shortage due to the sound insulation plate 150 installed on the internal passage P1'.

A rest of the motor housing 100 excluding the internal partition 115 may be made of a high intensity plastic, for example, polypropylene for intensity maintenance.

The motor housing 100 forming the sound insulation plate 150, and passage partitions 115, 117, 135 may be made of a fire retardant plastic in order to prevent the motor assembly 30 from being overheated.

As structured above, an air discharged from the air discharge port 35b is guided by the internal partition 115, the external partition 117 and the lower partition 135, and flows in a spiral manner (a direction of an arrow D). As the air spirally flows, an air velocity and direction change and a noise reduces.

If an internal pressure of the motor housing 100 rises due to the exhausting area shortage caused by the sound insulation installment, a rest of the air having failed to pass through the sound insulation plate 150 through the high intensity porous internal partition 115, discharges in a direction of an arrow E.

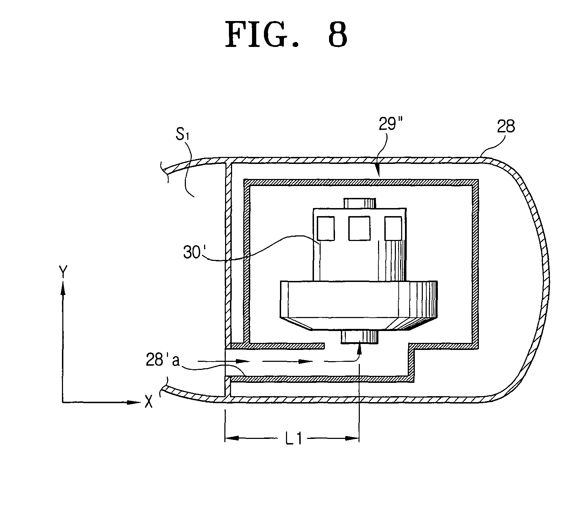

FIG. 8 is a vertical view of a main body of a vacuum cleaner and an exhausting apparatus of a motor assembly having the motor assembly internally mounted in a widthwise direction according to a third embodiment of the present invention. An exhausting apparatus 29" including a spiral exhausting passage of the motor assembly, a sound insulation plate and a sound insulation part is structured the same as the exhausting apparatus 29' of the motor assembly of FIG 4, so a description will be omitted.

The motor assembly 30' of FIG. 8 is mounted in a widthwise direction (a direction of Y) of the main body 28 of a vacuum cleaner, differently from the motor assembly 30 mounted in a lengthwise direction of the main body 28 of a vacuum cleaner of FIG. 4.

According to the embodiment of the present invention, the motor assembly 30' includes a suction pipe 28' a connecting the main body 28 of a vacuum cleaner and the motor assembly 28'a at a predetermined interval L1 in a lengthwise direction (a direction of X). An air freed from dusts in a dust collecting chamber S1 passes through the suction pipe 28'a and flows into the motor assembly 30'. That is, the motor assembly 30' of this embodiment has a longer passage than the motor assemblies 30 of the first and second embodiments by L1.

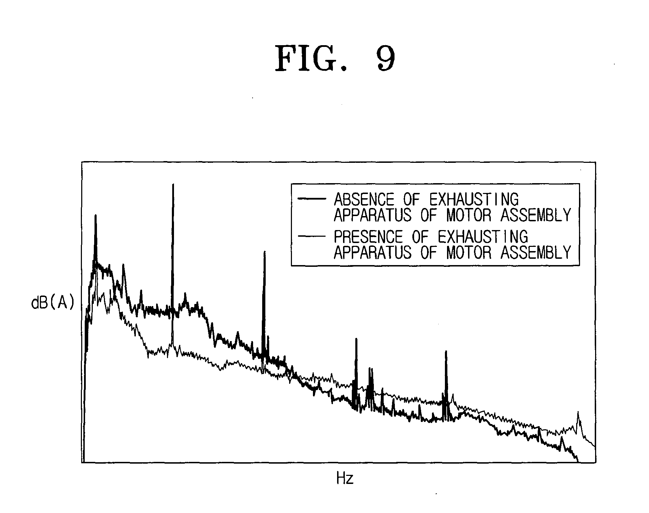

The longer passage of the motor assembly 30' enables the noise reduction greater than the motor assembly 30 of FIG. 4 mounted in a lengthwise direction (a direction of X) of the main body 28 of a vacuum cleaner, and the noise generated in the motor assembly 30' is removed in the suction pipe 28'a and fails to be transmitted externally from a vacuum cleaner through the dust collecting chamber S1. FIG. 9 is a graph showing the noise reduction effects, more specifically. Referring to FIG. 9, a presence of the exhausting apparatus 29" of the motor assembly has a noise reduction entirely greater than an absence of the exhausting apparatus 29", and especially, the noise reduction effects are excellent in a low frequency area.

As abovementioned, according to an embodiment of the present invention, an exhausting apparatus of a motor assembly and a vacuum cleaner having the same is featured as below.

First, a motor housing is made of a porous material and a sound insulation plate made of the porous material is mounted on a discharge passage, so a noise reduction is achieved for clam cleaning.

Secondly, the discharge passage is formed in a spiral manner and the motor assembly is mounted in a widthwise direction of a main body of the vacuum cleaner, to make the passage longer. Accordingly, the passage long enough to reduce the noise is secured for calm cleaning.

While the invention has been shown and described with reference to certain embodiments thereof, it will be understood by those skilled in the art that various changes in form and details may be made therein without departing from the spirit and scope of the invention as defined by the appended claims.

## Claims

1. An exhausting apparatus of a motor assembly comprising:
a motor assembly generating a suction force and formed with an air discharge port;
a motor housing enclosing the motor assembly and formed with an outlet exhausting an air discharged through the air discharge port; and
a sound insulation plate made of a porous material mounted on the discharge passage formed by the motor housing.

2. The exhausting apparatus of claim 1, wherein the motor housing comprises a sound insulation part made of the porous material at least one part, and at least one part of the air discharged from the air discharge port passes through the sound insulation part.

3. The exhausting apparatus of claim 2, wherein an amount of the air passing through the sound insulation plate equals an amount of the air passing through the sound insulation part.

4. The exhausting apparatus of any of claims 1 to 3, wherein the sound insulation plate is mounted on the outlet of the motor housing, on the discharge passage.

5. The exhausting apparatus of any of claims 2 to 4, wherein the sound insulation plate is made of a low-density porous plastic,
the sound insulation part is a made of a high-density porous plastic, and
a rest part of the motor housing excluding the sound insulation part is made of a high-intensity of plastic.

6. The exhausting apparatus of any of claims 2 to 5, wherein the discharge passage comprises an internal passage formed inside the motor housing and an external passage formed outside the motor housing, and the internal passage is formed spiral and spirally discharges the air discharged through the air discharge port of the motor assembly.

7. The exhausting apparatus of any of claims 2 to 6, wherein the motor housing comprises an internal passage wall and an external passage wall forming the passage, and the internal passage wall is made of the porous material at least one part.

8. The exhausting apparatus of claim 7, wherein the sound insulation plate is made of a low-density porous material,
the internal passage wall of the motor housing is made of a high-density porous material, and
a rest part of the motor housing excluding the internal passage wall is made of the high-intensity plastic.

9. A vacuum cleaner comprising:
a main body of the vacuum cleaner internally partitioned with a dust collecting chamber and a motor chamber;
a brush assembly communicated with the dust collecting chamber and formed with a suction port where an external air laden with a dust is drawn;
a motor assembly mounted on the motor chamber and generating a suction force, and formed with an air discharge port;
a motor housing enclosing the motor assembly, and formed with an outlet exhausting an air discharged from the air discharge port; and
a sound insulation plate made of a porous material mounted on the discharge passage formed by the motor housing,
wherein the motor housing comprises a sound insulation part made of the porous material at least one part, and at least one part of the air discharged from the air discharge port passes through the sound insulation part.

10. The vacuum cleaner of claim 9, wherein the sound insulation plate is mounted on the outlet of the motor housing, on the discharge passage.

11. The vacuum cleaner of any of claims 9 and 10 , wherein the sound insulation plate is made of a low-density porous plastic,
the sound insulation part is a made of a high-density porous plastic, and
a rest part of the motor housing excluding the sound insulation part is made of a high-intensity of plastic.

12. The vacuum cleaner of any of claims 9 to 11, wherein an amount of the air passing through the sound insulation plate equals an amount of the air passing through the sound insulation part.

13. The vacuum cleaner of any of claims 9 to 12, wherein the motor assembly is mounted in a widthwise direction within the main body of the vacuum cleaner.

14. The vacuum cleaner of any of claims 9 to 13, further comprising: a suction pipe connecting the main body of the vacuum cleaner and the motor assembly at a predetermined interval in a lengthwise.

15. The vacuum cleaner of any of claims 9 to 14, wherein the discharge passage comprises an internal passage formed inside the motor housing and an external passage formed outside the motor housing, and the internal passage is formed spiral and spirally discharges the air discharged through the air discharge port of the motor assembly.

16. The vacuum cleaner of any of claims 9 to 15, wherein the motor housing comprises a sound insulation part made of the porous material at least one part, and at least one part of the air discharged from the air discharge port passes through the sound insulation part.

17. The vacuum cleaner of claim 16, wherein the sound insulation plate is made of the low-density porous plastic,
the sound insulation part is a made of the high-density porous plastic, and
the rest part of the motor housing excluding the sound insulation part is made of the high-intensity of plastic.
